Europäisches Patentamt

European Patent Office

Office européen des brevets

(11) Veröffentlichungsnummer: **0 376 101**
**A2**

# EUROPÄISCHE PATENTANMELDUNG

(21) Anmeldenummer: 89123317.3

(22) Anmeldetag: 16.12.89

(51) Int. Cl.⁵: **H04M 1/66**

(30) Priorität: 24.12.88 DE 3843785

(43) Veröffentlichungstag der Anmeldung:
**04.07.90 Patentblatt 90/27**

(84) Benannte Vertragsstaaten:
**AT BE CH DE ES FR GB GR IT LI LU NL SE**

(71) Anmelder: **Standard Elektrik Lorenz Aktiengesellschaft**
**Lorenzstrasse 10**
**D-7000 Stuttgart 40(DE)**

(72) Erfinder: **Willhaus, Werner**
**Hornissenweg 100**
**D-7000 Stuttgart 40(DE)**

(74) Vertreter: **Pohl, Herbert, Dipl.-Ing et al**
**Standard Elektrik Lorenz AG Patent- und**
**Lizenzwesen Postfach 30 09 29**
**D-7000 Stuttgart 30(DE)**

(54) Zugangseinrichtung für eine ISDN-Anschalteeinrichtung eines öffentlichen Endgeräts.

(57) Es soll eine Zugangseinrichtung an einem öffentlichen Kommunikationsendgerät realisiert werden, um einem berechtigten Benutzer einen Zugriff auf eine Anschalteeinrichtung eines diensteintegrierenden digitalen Fernmeldenetzes zu ermöglichen.

Die erfindungsgemäße Zugangseinrichtung weist eine Anschalteeinrichtung (2) auf, deren Zugang über ein Schutzelement (4), nach Prüfung der Zugangsberechtigung durch erste Mittel (5) und nach Prüfung der ordnungsgemäßen Funktion der Anschalteeinrichtung durch zweite Mittel (6, 7, 8) freigegeben wird.

## Zugangseinrichtung für eine ISDN-Anschalteeinrichtung eines öffentlichen Endgerätes

Mit der Realisierung eines flächendeckenden diensteintegrierenden digitalen Fernmeldenetzes ergeben sich eine Vielzahl von neuen Diensten und Leistungsmerkmalen, angefangen vom Fernsprechdienst bis zur Datenübermittlung oder dem Telefaxdienst. Ein Zugang auf das Fernmeldenetz wird über eine Anschalteeinrichtung ermöglicht, an die ein Telekommunikationsendgerät angeschlossen wird. Zur Anschaltung eines Endgerätes ist anstelle der bisherigen Steckverbinderdose jetzt eine Telekommunikations-Anschluß-Einheit vorgesehen (vgl. Unterrichtsblätter der Deutschen Bundespost, Fernmeldewesen, Heft 6, 1988, S. 263 ff).

Die technische Aufgabe gemäß der Erfindung besteht darin, eine Zugangseinrichtung und ein Verfahren zur Bedienung der Zugangseinrichtung für ein öffenliches Telekommunikationsendgerät zu schaffen, um einem berechtigten Benutzer einen Zugriff auf eine Anschalteeinrichtung eines diensteintegrierenden digitalen Fernmeldenetzes zu ermöglichen. Eine Lösung dieser Aufgabe erfolgt erfindungsgemäß durch die schaltungstechnischen Merkmale des Patentanspruchs 1 und durch die verfahrenstechnischen Merkmale des Patentanspruchs 10.

Die Schaffung einer erfindungsgemäßen Zugangseinrichtung zum Zugriff auf eine Anschalteeinrichtung eines diensteintegrierenden digitalen Fernmeldenetzes ermöglicht die Nutzung einer Vielzahl von neuen Diensten und Leistungsmerkmalen von öffentlich zugänglichen Telekommunikationsendgeräten, wie Münz- oder Kartenfernsprecher, oder auch von öffentlichen Bildschirmtextendgeräten aus. Die erfindungsgemäße Zugangseinrichtung gewährleistet, daß nur berechtigte Teilnehmer Zugang erhalten. Da öffentliche Endgeräte einem aggressiven Umfeld ausgesetzt sind, wird ferner durch die erfindungsgemäße Zugangseinrichtung die Anschalteeinrichtung vor Vandalismus oder Betrugsversuchen geschützt. Außerdem erfolgt regelmäßig eine Überprüfung der ordnungsgemäßen Funktion der Anschalteeinrichtung, um einem Teilnehmer immer nur eine einwandfrei funktionierende Anschalteeinrichtung zur Verfügung stellen zu können.

Weitere vorteilhafte Ausgestaltungen der Erfindung sind den Unteransprüchen zu entnehmen.

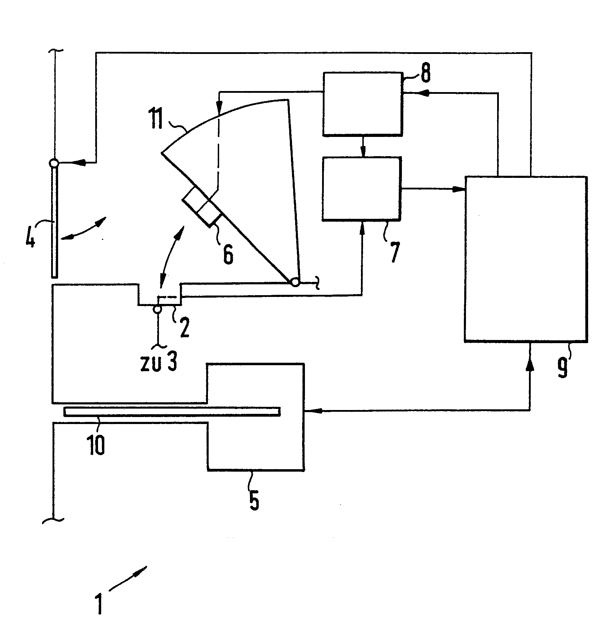

Ein Ausführungsbeispiel wird im folgenden anhand der Zeichnung erläutert.

Eine erfindungsgemäße Zugangseinrichtung für ein öffentliches Telekommunikationsendgerät 1, wie in der Figur gezeigt, enthält eine Anschalteeinrichtung 2, die mit einem dienstintegrierenden digitalen Fernmeldenetz 3 verbunden ist. Das Endgerät 1 - es wird von einem Wertkartenfernsprecher ausgegangen - ist in der Figur nur insoweit gezeigt, wie die in dem Endgerät 1 angebrachte Zugangseinrichtung betroffen ist. Ferner ist die Verbindung zum Fernmeldenetz 3 nur schematisch angedeutet.

Die Zugangseinrichtung besteht aus einem Schutzelement 4, über das der Zugang zur Anschalteeinrichtung 2 freigegeben oder gesperrt wird. Das Schutzelement 4 kann als einfache Klappe 4, wie in der Figur gezeigt, oder auch als Schieber ausgeführt sein. Es ist auch eine drehbare Anordnung aus Schutzelement 4 und Anschalteeinrichtung 2 in Form einer Trommel denkbar (nicht gezeigt).

Die Zugangseinrichtung weist erste Mittel 5 zum Verhindern eines unberechtigten Zuganges und zweite Mittel 6 zur Prüfung der ordnungsgemäßen Funktion der Anschalteeinrichtung 2 auf. Die ersten Mittel 5, die zweiten Mittel 6 und das Schutzelement 4 sind mit einer Steuereinheit 9 verbunden.

Als erste Mittel 5 zur Prüfung der Zugangsberechtigung wird eine Eingabe-, Lese- und Auswerteeinheit 5 für einen Aufzeichnungsträger 10 des Wertkartentelefons benutzt. Der Aufzeichnungsträger ist z.B. eine Wertkarte oder eine Kreditkarte 10, die in die Eingabeeinheit, vgl. die Figur, zur Prüfung der Zugangsberechtigung eingeführt wird. Ein solcher Wertkartenfernsprecher mit einer Eingabe-, Lese- und Auswerteeinrichtung 5 ist aus der deutschen Patentschrift DE-30 20 728 C2 zu entnehmen.

Anstelle der Prüfung der Zugangsberechtigung mittels einer Eingabe-, Lese- und Auswerteeinheit für Aufzeichnungsträger ist auch eine Eingabetastatur mit einer Auswerteeinheit verwendbar, über die ein Berechtigungscode eingegeben und ausgewertet wird. Insbesondere ist die üblicherweise vorhandene Wähltastatur des Wertkarten- oder eines Münzfernsprechers nutzbar.

Die Anschalteeinrichtung 2 ist als elektromechanisch Telekommunikationsanschlußeinheit, wie von der Deutschen Bundespost standardisiert, ausgeführt (vgl. die Figur), über die eine Steckverbindung mit dem digitalen Fernmeldenetz 3 herstellbar ist.

Zur Prüfung der ordnungsgemäßen Funktion der Telekommunikationsanschlußeinheit, im folgenden TAE genannt, bestehen die zweiten Mittel aus einem elektromechanischen Stecker 6. Der Stecker 6 ist mit einem drehbaren Element 11 so verbunden, daß, gesteuert durch die Steuereinheit 9, eine Steckverbindung mit der TAE hergestellt und wieder gelöst werden kann (vgl. die Figur).

Um nicht nur eine Prüfung der mechanischen Funktion der TAE ausführen zu können, weisen die zweiten Mittel gemäß einer weiteren Ausgestaltung der Erfindung eine Vergleichseinheit 7 und einen Prüfprogrammspeicher 8 auf. Die Steuereinheit 9 ist mit dem Prüfprogrammspeicher 8 zum Starten eines Prüfvorganges und mit der Vergleichseinheit 7 zum Empfangen von Daten für die Prüfergebnisse verbunden. Weiterhin ist der Prüfprogrammspeicher 8 mit der Vergleichseinheit 7 zur Abgabe von Sollwerten verbunden. Ferner ist die Vergleichseinheit 7 mit der TAE verbunden.

Die Anschalteeinrichtung 2 kann auch zum Herstellen der Verbindung mit dem digitalen Fernmeldenetz 3 ein galvanisch trennendes Anschlußelement enthalten (nicht gezeigt), über das ein elektrooptischer oder ein induktiver oder ein kapazitiver Anschluß herstellbar ist. Es ist auch eine Kombination aus diesen Anschlußmöglichkeiten, wie z.B. eine induktive Kopplung für die Energieversorgung und eine elektrooptische Kopplung für die Signalübertragung realisierbar.

Im folgenden wird anhand der wie zuvor beschriebenen Zugangseinrichtung das erfindungsgemäße Verfahren zur Bedienung dieser Zugangseinrichtung erläutert.

Damit ein Teilnehmer Zugang zum Zugriff auf die TAE erhält, um z.B. eine Datenübermittlung über das ISDN-Fernmeldenetz auszuführen, wird in einem ersten Schritt seine Zugangsberechtigung geprüft. Dazu führt der Teilnehmer z.B. seine Kreditkarte in die Eingabe-, Lese- und Auswerteeinheit 5 ein. Die von der Karte gelesenen Daten werden ausgewertet und entsprechend Daten für ein positives oder ein negatives Prüfungsergebnis zur Steuereinheit 9 übertragen.

Dadurch wird, gesteuert durch die Steuereinheit 9, eine Prüfung der ordnungsgemäßen Funktion der TAE veranlaßt. Wie in der Figur schematisch gezeigt, wird der elektromechanische Stecker 6 mit Hilfe des drehbaren Elements 11 in die TAE eingesteckt, wodurch eine mechanische Prüfung der TAE erfolgt.

Gesteuert durch die Steuereinheit 9 wird jetzt ein Prüfprogramm aus dem Prüfprogrammspeicher 8 ausgelesen. Dazu wird für jeden Prüfschritt ein Prüfsignal zur TAE angelegt und gleichzeitig ein Sollwert zur Vergleichseinheit 7 übertragen. Der aufgrund des Prüfsignals in der TAE hervorgerufene Istwert wird ebenfalls zur Vergleichseinheit 7 übertragen. Falls der Vergleich von Sollwert und Istwert eine unzulässige Abweichung (über Schwellwerte vorgebbar) ergibt, wird ein negatives Teilprüfungsergebnis (Fehlersignal) zur Steuereinheit 9 übertragen. Entsprechend wird das gesamte Prüfprogramm schrittweise abgearbeitet und ein Gesamtprüfergebnis erstellt.

Ein Minimalprogramm zur Prüfung der ordnungsgemäßen Funktion der TAE besteht darin, einen Strom bestimmten Betrags über die Steckkontakte zu leiten und einen Spannungsabfall an den Steckkontakten zu ermitteln. Falls ein ausreichend niedriger Spannungsabfall, unterhalb eines vorgegebenen Schwellenwertes, ermittelt wird, wird ein positives Prüfungsergebnis zur Steuereinheit 9 übertragen.

Danach wird die Steckverbindung zwischen dem Stecker 6 und der TAE mit Hilfe des drehbaren Elements 11 wieder gelöst.

Falls die beiden Prüfungen Zugangsberechtigung und ordnungsgemäße Funktion der TAE positive Prüfungsergebnisse ergeben haben, wird, gesteuert durch die Steuereinheit 9, die Klappe 4 geöffnet (vgl. die Figur), und der Teilnehmer erhält Zugang zur TAE.

Gemäß einer weiteren Ausgestaltung der Erfindung wird der Stecker 6 in eine solche Position geführt, daß nach der Freigabe des Zugangs durch die Klappe 4 gleichzeitig die Klappe 4 einen Zugriff auf den Stecker 6 verhindert.

Nach beendigtem Zugriff des Teilnehmers wird durch die Steuereinheit die Klappe 4 zum Sperren des Zugangs angesteuert. Jetzt erfolgt eine erneute Prüfung der ordnungsgemäßen Funktion der TAE entsprechend dem bereits beschriebenen ersten Prüfvorgang.

Ergibt sich ein positives Prüfungsergebnis, so werden alle für diesen Teilnehmer ermittelten Daten in der Steuereinheit 9 gelöscht (Reset), so daß ein nächster Teilnehmer Zugang zur TAE erhalten kann.

Falls die erneute Prüfung einen negatives Prüfungsergebnis (Fehlermeldung) ist, wird der Zugang zur TAE erst nach Behebung der Störung z.B. durch eine Serviceperson wieder freigegeben. Die Serviceperson kann nach erfolgter Störungsbehebung einen Reset veranlassen.

Eine solche Störung wird in Form eines Hinweises, z.B. auf einer Anzeigeeinrichtung des Wertkartenfernsprechers ausgegeben.

Diese Anzeigeneinrichtung ist ferner zur Ausgabe einer Bedienerführung gemäß dem vorgenannten Verfahren nutzbar.

Da es öfters vorkommen kann, daß eine leichtere Verschmutzung der Kontakte der TAE schon zu einem negatives Prüfungsergebnis für die Prüfung der ordnungsgemäßen Funktion führen kann, kann gemäß einer weiteren Ausgestaltung der Erfindung ein Hinweis zur Reinigung auf der Anzeigeeinrichtung an den Teilnehmer ausgegeben werden.

Ein weiterer Vorteil des erfindungsgemäßen Verfahrens besteht darin, daß während der Prüfung der Zugangsberechtigung eines Teilnehmers zusätzlich auch eine Teilnehmeridentifikation ermittelt werden kann. Dazu wird z.B. eine Kennummer im Falle einer Verwendung einer Kreditkarte ermittelt, oder es muß zusätzlich über die Eingabetastatur eine Kennummer eingegeben werden. Diese Daten werden zur Steuereinheit 9 übertragen und können dann, falls die erneute Prüfung der TAE ein negatives Prüfungsergebnis ergibt, zur Ermittlung des Teilnehmers in der Steuereinheit 9 abrufbar gespeichert werden. Nach erfolgter Behebung der Störung werden diese Daten durch den Reset ebenfalls gelöscht.

**Ansprüche**

1. Zugangseinrichtung für ein öffentliches Kommunikationsendgerät (1) zum Zugriff auf eine Anschalteeinrichtung (2) eines diensteintegrierenden, digitalen Fernmeldenetzes (3), mit einem Schutzelement (4) zum Verhindern eines unberechtigten Zuganges, mit ersten Mitteln (5) zur Prüfung einer Zugangsberechtigung eines Teilnehmers, mit zweiten Mitteln (6, 7, 8) zur Prüfung der ordnungsgemäßen Funktion der Anschalteeinrichtung (2) und mit einer Steuereinheit (9), die mit den ersten Mitteln (5), den zweiten Mitteln (6, 7, 8) und dem Schutzelement (4) verbunden ist.

2. Zugangseinrichtung nach Anspruch 1, mit einer Klappe (4) oder einem Schieber oder einer Trommel als Schutzelement.

3. Zugangseinrichtung nach Anspruch 1 oder 2, wobei die ersten Mittel aus einer Eingabe-, Lese- und Auswerteeinheit (5) für Aufzeichnungsträger (10) des öffentlichen Kommunikationsendgerätes (1) zur Prüfung der Zugangsberechtigung bestehen.

4. Zugangseinrichtung nach Anspruch 1, wobei die ersten Mittel (5) aus einer Eingabetastatur und einer mit der Eingabetastatur verbundenen Auswerteeinheit des öffentlichen Kommunikationsendgerätes (1) bestehen.

5. Zugangseinrichtung nach einem der vorhergehenden Ansprüche, wobei die Anschalteeinrichtung (2) eine elektromechanische Telekommunikationsanschlußeinheit ist, über die eine Steckverbindung mit dem digitalen Fernmeldenetz herstellbar ist.

6. Zugangseinrichtung nach den Ansprüchen 1 bis 4, wobei die Anschalteinrichtung (2) zum Herstellen einer Verbindung mit dem Fernmeldenetz (3) ein galvanisch trennendes Anschlußelement enthält, über das ein elektrooptischer und/oder ein induktiver und/oder ein kapazitiver Anschluß herstellbar ist.

7. Zugangseinrichtung nach Anspruch 5, wobei die zweiten Mittel aus einem elektromechanischen Stecker (6) oder einer elektromechanischen Buchse bestehen, der bzw. die gesteuert durch die Steuereinheit (9) eine Steckverbindung mit der Telekommunikationsanschlußeinheit zur Prüfung der ordnungsgemäßen Funktion herstellt.

8. Zugangseinrichtung nach Anspruch 7, wobei der elektromechanische Stecker (6) oder die elektromechanische Buchse nach Lösen der Verbindung in eine Position geführt wird, in der das Schutzelement (4) nach Freigabe des Zugangs gleichzeitig einen Zugriff auf den Stecker bzw. die Buchse verhindert.

9. Zugangseinrichtung nach Anspruch 1 oder 8, mit aus einer Vergleichseinheit (7) und einem Prüfprogrammspeicher (8) bestehenden zweiten Mitteln, die mit der Steuereinheit (9) verbunden sind, wobei der Prüfprogrammspeicher (8) mit der Vergleichseinheit (7) zur Abgabe von Sollwerten und mit der Anschalteeinrichtung (2) zum Übertragen von Prüfsignalen verbunden ist, wobei die Anschalteeinrichtung (2) mit der Vergleichseinheit (7) zur Übertragung von aufgrund der Prüfsignale hervorgerufener Istwerte verbunden ist und wobei die Vergleichseinheit (7) bei Feststellung einer unzulässigen Abweichung zwischen dem Sollwert und dem Istwert eine Fehlermeldung zur Steuereinheit (9) überträgt.

10. Verfahren zur Bedienung einer Zugangseinrichtung nach einem der Ansprüche 1 bis 9, mit folgenden Verfahrensschritten:

a) Prüfung einer Zugangsberechtigung des Teilnehmers und Übertragung von Daten für das Prüfungsergebnis zur Steuereinheit,

b) Prüfung der ordnungsgemäßen Funktion der Anschalteeinrichtung und Übertragung von Daten für das Prüfungsergebnis zur Steuereinheit,

c) Ansteuern des Schutzelements zur Freigabe des Zugangs, falls die Prüfungen gemäß den Schritten a) und b) positive Prüfungsergebnisse liefern,

d) Ansteuern des Schutzelements nach beendigtem Zugriff durch den Teilnehmer zum Sperren des Zugangs,

e) erneute Prüfung der ordnungsgemäßen Funktion der Anschalteeinrichtung und Übertragung von Daten für das Prüfungsergebnis zur Steuereinheit, wobei

f) infolge eines positiven Prüfungsergebnisses eine Löschung der zur Steuereinheit übertragenen Daten für einen neuen Teilnehmerzugriff erfolgt oder

g) infolge eines negativen Prüfungsergebnisses ein Sperren des Zugangs bis zur Behebung der Störung und eine Ausgabe eines Störungshinweises erfolgt.

11. Verfahren nach Anspruch 10, wobei infolge eines negativen Prüfungsergebnisses für die Prüfung der ordnungsgemäßen Funktion der Anschalteeinrichtung eine Freigabe des Zugangs über das Schutzelement und an den Teilnehmer eine Ausgabe eines Hinweises zur Reinigung der Anschalteeinrichtung erfolgt und wobei sich eine erneute Prüfung auf ordnungsgemäße Funktion anschließt.

12. Verfahren nach Anspruch 10, wobei während der Prüfung der Zugangsberechtigung eines Teilnehmers eine Teilnehmeridentifikation ermittelt und entsprechende Daten zur Steuereinheit übertragen werden und wobei infolge eines negativen Prüfungsergebnisses für die erneute Prüfung der ordnungsgemäßen Funktion der Anschalteeinrichtung die Daten für die ermittelte Teilnehmeridentifikation solange in der Steuereinheit abrufbar gespeichert werden, bis eine Behebung der Störung erfolgt ist.

W.Willhaus 1E
24. 1. 89